# EUROPEAN PATENT SPECIFICATION

(11) **EP 4 333 132 B1**
(45) Date of publication and mention of the grant of the patent: **29.01.2025**
(21) Application number: 22193296.5
(22) Date of filing: 31.08.2022
(51) Int. Cl.: H01M 8/04111, H01M 8/04119, H01M 8/04492, H01M 8/04537, H01M 8/04664

(54) **A COMPUTER-IMPLEMENTED METHOD FOR DETERMINING A DEGRADATION STATE OF A TURBO AND/OR A HUMIDIFIER OF A FUEL CELL SYSTEM**
COMPUTERIMPLEMENTIERTES VERFAHREN ZUR BESTIMMUNG EINES DEGRADATIONSZUSTANDS EINES TURBOS UND/ODER EINES BEFEUCHTERS EINES BRENNSTOFFZELLENSYSTEMS
PROCÉDÉ MIS EN UVRE PAR ORDINATEUR POUR DÉTERMINER UN ÉTAT DE DÉGRADATION D'UN TURBOCOMPRESSEUR ET/OU D'UN HUMIDIFICATEUR D'UN SYSTÈME DE PILE À COMBUSTIBLE

(43) Date of publication of application: 06.03.2024
(73) Proprietor: VOLVO TRUCK CORPORATION, 405 08 Göteborg (SE)
(72) Inventor: BLOMGREN, Fredrik, 425 35 Hisings Kärra (SE); LUONG, Staffan, 504 75 Borås (SE); LINDBERG, Johan, 415 33 Göteborg (SE)
(74) Representative: Valea AB

(56) References cited:
- DE-A1- 102017 220 627
- US-A1- 2021 075 044

## Description

### TECHNICAL FIELD

The invention relates to a computer-implemented method for determining a degradation state of a turbo and/or a humidifier of a fuel cell system. The invention also relates to a control unit, a fuel cell system, a vehicle, a computer program and a computer readable medium.

The invention can be applied in heavy-duty vehicles, such as trucks, buses and construction equipment. Although the invention will be described with respect to a truck, the invention is not restricted to this particular vehicle, but may also be used in other vehicles such as wheel loaders, excavators, dump-trucks, buses, marine vessels and passenger cars.

### BACKGROUND

A fuel cell is an electrochemical cell which converts chemical energy into electricity. The fuel cell converts the chemical energy of a fuel, typically hydrogen, and an oxidizing agent, typically oxygen, into electricity. Accordingly, a fuel cell can be used as an alternative or as a complement to electric batteries. In recent years fuel cells have been considered for powering electric vehicles, such as pure electric vehicles and hybrid electric vehicles. Prior art documents DE 10 2017 220627, US 2021/075044 disclose fuel cell systems for vehicles.

Typically, a fuel cell system for a vehicle comprises a fuel cell stack comprising one or more fuel cells. In addition, the fuel cell system typically comprises a turbo and a humidifier. The turbo comprises a turbine and a compressor which are drivingly connected. During use of the fuel cell system, an inlet airflow to the fuel cell stack flows thereto via the compressor and the humidifier. The inlet airflow delivers the above-mentioned oxidizing agent to the fuel cell(s). An outlet airflow from the fuel cell stack flows therefrom via the humidifier and the turbine until it exits into an external environment. Some or all of the outlet airflow may bypass the humidifier at certain occasions. During use, the humidifier transfers water, or water and heat, from the outlet airflow to the inlet airflow.

A fuel cell system for a vehicle is often used in combination with an electrical energy storage system, such as a battery pack comprising lithium-ion cells. The requested power for the vehicle can be delivered in combination by the fuel cell system and the electrical energy storage system or by one of the systems, depending on different factors. For example, the distribution of power from each system may be optimized in dependence on energy efficiency.

Even though it is known to use a fuel cell system for powering a vehicle as e.g. mentioned in the above, there is still a strive to develop further improved fuel cell system technology.

### SUMMARY

In view of the above, an object of the invention is to provide a computer-implemented method for determining a degradation state of a turbo and/or a humidifier of a fuel cell system which at least partly alleviates one or more drawbacks of the prior art, or which at least provides a suitable alternative. Yet further objects of the invention are to provide a control unit, a fuel cell system, a vehicle, a computer program and/or a computer readable medium, which alleviate at least one or more drawbacks of the prior art, or which at least provide suitable alternatives.

According to a first aspect, the object is achieved by a computer-implemented method according to claim 1.

Hence, there is provided a computer-implemented method for determining a degradation state of a turbo and/or a humidifier of a fuel cell system for a vehicle. The fuel cell system comprises a fuel cell stack, in addition to the turbo and the humidifier.

The method comprises:
- obtaining a fuel cell system efficiency value which corresponds to a measured efficiency decrease of the fuel cell system during use with respect to a first reference efficiency,
- obtaining a fuel cell stack efficiency value which corresponds to a measured efficiency decrease of the fuel cell stack during use with respect to a second reference efficiency, and
- determining the degradation state of the turbo and/or the humidifier based on a difference between the fuel cell system efficiency value and the fuel cell stack efficiency value.

The turbo comprises a turbine and a compressor which are drivingly connected. During use of the fuel cell system, an inlet airflow to the fuel cell stack flows thereto via the compressor and the humidifier. The inlet airflow delivers an oxidizing agent to the fuel cell stack. An outlet airflow from the fuel cell stack flows therefrom via the humidifier and the turbine until it exits into an external environment. Some or all of the outlet airflow may bypass the humidifier at certain occasions. During use, the humidifier transfers water, or water and heat, from the outlet airflow to the inlet airflow.

By the provision of a method as disclosed herein, a degradation state of the turbo and/or the humidifier can be determined in an efficient manner. The present invention is based on a realization that it is advantageous to determine a degradation state of the turbo and/or the humidifier during use of the fuel cell system. For example, the determined degradation state(s) can be used for optimizing the use of the fuel cell system, such as for optimizing a power distribution between the fuel cell system and an electrical energy storage system of the vehicle. Additionally, or alternatively, the determined degradation state(s) can be used for determining a service need of the turbo and/or the humidifier, and/or if the turbo and/or the humidifier needs to be replaced.

Using the fuel cell system efficiency value and the fuel cell stack efficiency value for determining the degradation state of the turbo and/or the humidifier implies a fast, reliable and cost-efficient degradation determination.

The first reference efficiency may be indicative of a determined efficiency of the fuel cell system when it is new, i.e. not yet used, or at least not yet used for a long time, such as used for less than 100 operating hours. The second reference efficiency may be indicative of a determined efficiency of the fuel cell stack when it is new, i.e. not yet used, or at least not yet used for a long time, such as used for less than 100 operating hours.

Degradation of the turbo and/or the humidifier may also be denoted wear of the turbo and/or the humidifier.

Optionally, the method further comprises:
- obtaining a relative air humidity value which corresponds to a measured relative air humidity during use at an inlet of the fuel cell stack, and, when the relative air humidity value is equal to or above an air humidity threshold, setting the difference as corresponding to a degradation state of the turbo, and/or, when the relative air humidity value is below the air humidity threshold, setting the difference as corresponding to a combined degradation state of the turbo and the humidifier. The relative air humidity measured at the inlet of the fuel cell stack may mean that the measurement is performed at a portion along an airflow passage of the fuel cell system which is located downstream the humidifier and upstream the fuel cell stack. By using the relative air humidity value as disclosed herein, an efficient determination of the degradation of the turbo and/or the humidifier can be performed. For example, it has been realized that when the relative air humidity is equal to or above the air humidity threshold, the difference between the fuel cell system efficiency value and the fuel cell stack efficiency value corresponds to, or at least substantially corresponds to, the degradation of the turbo. Accordingly, this results in an efficient approach for determining the degradation level of the turbo. In addition, this may also result in an efficient approach for determining the combined degradation level of the turbo and the humidifier. In an example embodiment, the method may further comprise using an operating point of the fuel cell system at which the relative air humidity is equal to or above the air humidity threshold. Thereby, it can be assured that the difference corresponds to a degradation state of the turbo. The method may further comprise finding the operating point at which the relative air humidity is equal to or above the air humidity threshold. This may be performed by varying the operating point until the relative air humidity is equal to or above the air humidity threshold. In some situations, such operation point may not be found, implying that the humidifier is degraded. The operating point may be defined as being indicative of a power level of the fuel cell system.

The term relative air humidity, or relative humidity, is known in the art, and may be defined as moisture content, i.e. water vapor, of the air, and may be expressed as a percentage of the amount of moisture that can be retained by the air at a given temperature and pressure without condensation. For example, a relative air humidity value of 100 % indicates that saturation has been reached and that condensation will occur.

Optionally, the air humidity threshold corresponds to a relative air humidity of 98 % or more, such as substantially 100 % relative air humidity. This may in an embodiment be referred to a saturated, or substantially saturated, water content in the air flowing downstream the humidifier and upstream the fuel cell stack during use. Accordingly, when the relative air humidity value is equal to or above the air humidity threshold, it can be assumed that the humidifier is functional without any issues.

Optionally, the efficiency decrease of the fuel cell system and of the fuel cell stack, and/or the relative air humidity at the inlet of the fuel cell stack, is/are measured during stationary operating conditions of the fuel cell system. This implies a more reliable measurement. Still optionally, the measurement/s is/are performed during a minimum time period during the stationary operating conditions of the fuel cell system. This implies a further improved measurement. For example, the values obtained from the one or more respective measurements may correspond to one or more respective average values, median values, or any other value which is based on the result from the one or more respective measurements.

Optionally, when it is determined that there is a combined degradation state of the turbo and the humidifier, e.g. when the relative air humidity value is below the air humidity threshold, the method may further comprise using a humidifier model for estimating a level of degradation of the humidifier. A humidifier model to estimate the level of degradation may for example be a model which models the humidifier in accordance with the first law of thermodynamics for open systems. For example, a model may be provided which models the ability of the humidifier, e.g. the ability of a membrane of the humidifier, to transport water mass and heat from a humid side to a dry side thereof. As such, by way of example, the humidifier may be modelled as two parts, a first part being a volume with dry air and a second part being a volume with wet air, wherein water mass and heat is transported through the membrane from the second part to the first part. By fitting measured parameters in the model, values of water mass and heat transported may be obtained, and these values may be used for estimating a state of health of the humidifier, i.e. its level of degradation. For example, these values may be compared with a reference to thereby obtain a value indicative of the state of health of the humidifier. The measured parameters may for example be measured downstream and/or upstream the humidifier during use, and may be at least one of an airflow, waterflow, relative humidity, pressure, air temperature and water temperature. In addition, the model may include a parameter relating to a thickness of the membrane, which for example may affect the ability of the membrane to transport water mass and/or heat as a function of time.

Optionally, the stationary operating conditions are associated with one or more predetermined road segments for the vehicle. The one or more predetermined road segments may be road segments where stationary operating conditions can be expected. For example, a predetermined road segment may correspond to a road stretch without, or with only minor, varying inclinations, such as a portion of a highway where there are no or only minor inclinations.

Optionally, the efficiency decrease of the fuel cell stack is measured by use of polarization curves and/or by electrochemical impedance spectra of the fuel cell stack. This implies a reliable and robust measurement and/or reliable and robust measurement values.

Optionally, the method further comprises:
- measuring the efficiency decrease of the fuel cell system during use for obtaining the fuel cell system efficiency value, measuring the efficiency decrease of the fuel cell stack during use for obtaining the fuel cell stack efficiency value, and/or measuring the relative air humidity at the inlet of the fuel cell stack for obtaining the relative air humidity value. The measurements may be performed simultaneously during use of the fuel cell system, and/or within a common time window during use of the fuel cell system, e.g. during the above mentioned stationary operating conditions. This implies a reliable and robust measurement and/or reliable and robust measurement values.

Optionally, the method further comprises:
- updating operating constraints of the fuel cell system when the set degradation state of the turbo and/or the set combined degradation state of the turbo and the humidifier fulfil a criterion.

Thereby, by updating operating constraints, the service life of the fuel cell system may be increased. For example, if the fuel cell system is used in combination with e.g. an electrical energy storage system, the operating constraints may be updated so that the electrical energy storage system is used more and/or in other operating ranges, and/or so that the fuel cell system is used less and/or in other operating ranges. As a result, service life of the combined system, i.e. the fuel cell system and the electrical energy storage system, may be increased.

The fuel cell system may be adapted to be operated with adjustable operating dynamics and/or in an adjustable operating window defining operating constraints for the fuel cell system, wherein increasing the operating dynamics and/or the operating window is associated with an increased expected degradation of the fuel cell system and wherein reducing the operating dynamics and/or the operating window is associated with a reduced expected degradation of the fuel cell system.

By operating dynamics of a system is herein meant how the operation of the system is varied over time. For example, large and/or rapid variations of an operating parameter during use represent higher operating dynamics of the system compared to a situation with smaller and/or slower variations of the operating parameter. This may also be referred to as a slew rate of the system. By an operating window is herein meant a window, or range, within which an operating parameter is during use. By way of example, an operating parameter may refer to a power output from the system. As such, operating dynamics may be defined as power dynamics of the fuel cell system, e.g. how fast the fuel cell system can go from low power to high or full power. Other non-limiting examples of operating parameters are voltage level, ampere level and power throughput. As yet another non-limiting example, an operating parameter may relate to if a shutdown of the system is allowed or not. For example, too many shutdowns of the fuel cell system may result in higher degradation.

According to a second aspect, the object is achieved by a control unit according to claim 10.

Hence, there is provided a control unit for determining a degradation state of a turbo and/or a humidifier of a fuel cell system for a vehicle, the fuel cell system comprising a fuel cell stack, in addition to the turbo and the humidifier, wherein the control unit is configured to perform the steps of the method according to any one of the embodiments of the first aspect.

Advantages and effects of the control unit are analogous to the advantages and effects of the method as disclosed herein. It shall also be noted that all embodiments of the control unit are combinable with all embodiments of the method, and vice versa.

The control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device. The control unit may comprise embedded hardware, sometimes with integrated software. Examples of physical relationships are: shared casing and components mounted on one or several circuit boards. Further, the control unit may be any kind of control unit, and it may also comprise more than one control unit, i.e. the control unit may be configured by two or more sub-control units, which may be provided close to each other or be separated from each other. In some embodiments, the control unit may be denoted a computer.

According to a third aspect, the object is achieved by a fuel cell system according to claim 11.

Hence, there is provided a fuel cell system for a vehicle, the fuel cell system comprising a fuel cell stack, a turbo and a humidifier, and further comprising at least one first sensor for measuring efficiency decrease of the fuel cell system during use, at least one second sensor for measuring efficiency decrease of the fuel cell stack during use and at least one third sensor for measuring relative air humidity at an inlet of the fuel cell stack during use, wherein the fuel cell system further comprises a control unit according to any one of the embodiments of the second aspect.

Advantages and effects of the fuel cell system are analogous to the advantages and effects of the method as disclosed herein. It shall also be noted that all embodiments of the fuel cell system are combinable with all embodiments of the method and the control unit, and vice versa.

According to a fourth aspect, the object is achieved by a vehicle according to claim 12.

Hence, there is provided a vehicle comprising a fuel cell system according to any one of the embodiments of the third aspect.

According to a fifth aspect, the object is achieved by a computer program according to claim 13.

Hence, there is provided computer program comprising program code means for performing the steps of any of the embodiments of the first aspect when said program is run on the control unit according to the second aspect.

According to a sixth aspect, the object is achieved by a computer readable medium according to claim 14.

Hence, there is provided a computer readable medium carrying a computer program comprising program code means for performing the steps of any of the embodiments of the first aspect when said program product is run on the control unit according to the second aspect.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a schematic view of a fuel cell system according to an example embodiment of the present invention,
Fig. 2 is a side view of a vehicle according to an example embodiment of the present invention,
Fig. 3 is a flowchart of a method according to example embodiments of the present invention,
Figs. 4a-b are graphs showing polarization curves and electrochemical impedance spectra for a fuel cell stack, and
Fig. 5 is a graph relating to efficiency of a fuel cell system.

It shall be understood that the embodiments shown and described are exemplifying and that the invention is not limited to these embodiments. It shall also be noted that some details in the drawings may be exaggerated in order to better describe and illustrate the invention. Like reference characters throughout the drawings refer to the same, or similar, type of element unless expressed otherwise.

### DETAILED DESCRIPTION OF EXAMPLE EMBODIMENTS OF THE INVENTION

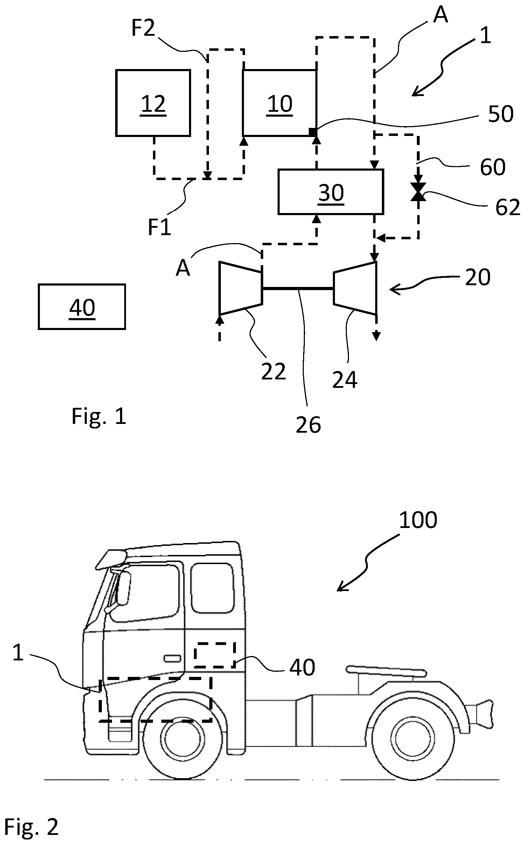

Fig. 1 depicts a schematic view of a fuel cell system 1 according to an example embodiment of the present invention. The fuel cell system 1 comprises a fuel cell stack 10, a turbo 20 and a humidifier 30. The turbo 20 comprises a compressor 22 and a turbine 24 which are drivingly connected, in this example drivingly connected by a rotatable axle 26.

The fuel cell system 1 may further comprise at least one first sensor (not shown) for measuring an efficiency decrease of the fuel cell system 1 during use, at least one second sensor (not shown) for measuring an efficiency decrease of the fuel cell stack 10 during use and at least one third sensor 50 for measuring relative air humidity at an inlet of the fuel cell stack 10 during use. The at least one third sensor 50 may be adapted to measure a relative air humidity at any position provided downstream the humidifier 30 and upstream the fuel cell stack 10. The at least one first sensor for measuring an efficiency decrease of the fuel cell system 1 during use may for example be at least one of a sensor which measures a power output from the fuel cell system 1 and a sensor which measures a fuel flow to the fuel cell stack 10. The power output may for example be measured by use of voltage and/or current sensors. By way of example, the efficiency decrease of the fuel cell system 1 may be obtained by comparing the measured power output from the fuel cell system 1 with the measured fuel flow to the fuel cell stack 10. The at least one second sensor for measuring an efficiency decrease of the fuel cell stack 10 may for example be at least one of a sensor which measures electrical current generated by the fuel cell stack 10 and a sensor which measures voltage level of the fuel cell stack 10.

Measured values from the at least one second sensor may be used for obtaining the efficiency value of the fuel cell stack 10.

As shown in fig. 1, the fuel cell system 1 may further comprise a fuel tank 12, such as a hydrogen fuel tank. Fuel may flow in a fuel path F1 from the fuel tank 12 and into the fuel cell stack 10 during use. As further depicted by a flow arrow F2, excess fuel may be recirculated out from the fuel cell stack 10 and back into the fuel cell stack 10 again.

Fuel is arranged to enter at an anode side of each fuel cell of the fuel cell stack 10. Air is arranged to enter at a cathode side of each fuel cell of the fuel cell stack 10. The air is entered via an air path A. The air path A at least partly pass the compressor 22, the humidifier 30 and the fuel cell stack 10 in subsequent order. Thereafter, the air path A at least partly passes the humidifier 30 and the turbine 24. As shown, at least a portion of the airflow A may selectively bypass the humidifier 30 by use of bypass circuit 60 comprising a bypass valve 62. As shown, the bypass circuit 60 and the bypass valve 62 may be arranged downstream the fuel cell stack 10.

The humidifier 30 is arranged to transfer water, or water and heat, from air that has passed the fuel cell stack 10 to air which will enter the fuel cell stack 10.

The fuel cell system 1 may as further shown comprise a control unit 40. The control unit 40 may be configured to control the operation of the fuel cell system 1. The control unit 40 may additionally or alternatively be configured to perform a method according to an example embodiment of the present invention. For example, the control unit 40 may be arranged to be in communicative contact with the at least one third sensor 50. Additionally, or alternatively, the control unit 40 may be configured to control opening and closing of the bypass valve 62.

Fig. 2 depicts a vehicle 100 according to an example embodiment of the present invention. The vehicle 100 is in this example a truck, more particularly a towing truck for towing one or more trailers (not shown). It shall however be understood that the invention is not limited to only this type of vehicle, but may be used in any other vehicle, such as a bus, a wheel loader, an excavator, a dump-truck, a passenger car and a marine vessel.

The vehicle 100 comprises a fuel cell system 1, such as the fuel cell system 1 as shown in fig. 1. The vehicle 100 may as shown also comprise a control unit 40 as also e.g. shown in fig. 1. Accordingly, the control unit 40 may be an onboard control unit. Additionally, or alternatively, the control unit may be an off-board control unit, such as a remote server. As such, according to an example embodiment, the vehicle 100 may be adapted to communicate with an off-board control unit.

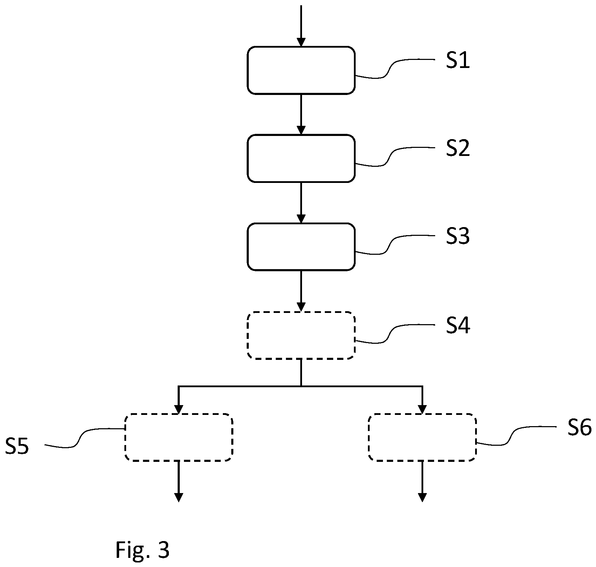

With reference to fig. 3, a flowchart of a method according to example embodiments of the invention is shown. The method is used for determining a degradation state of a turbo 20 and/or a humidifier 30 of a fuel cell system 1 for a vehicle 100, e.g. the fuel cell system 1 as shown in fig. 1.

The method comprises:
S1: obtaining a fuel cell system efficiency value which corresponds to a measured efficiency decrease of the fuel cell system 1 during use with respect to a first reference efficiency,
S2: obtaining a fuel cell stack efficiency value which corresponds to a measured efficiency decrease of the fuel cell stack 10 during use with respect to a second reference efficiency, and
S3: determining the degradation state of the turbo 20 and/or the humidifier 30 based on a difference between the fuel cell system efficiency value and the fuel cell stack efficiency value.

As shown by boxes with dashed lines, the method may further comprise:
S4: obtaining a relative air humidity value which corresponds to a measured relative air humidity during use at an inlet of the fuel cell stack 10, and, when the relative air humidity value is equal to or above an air humidity threshold,
S5: setting the difference as corresponding to a degradation state of the turbo 20, and/or, when the relative air humidity value is below the air humidity threshold,
S6: setting the difference as corresponding to a combined degradation state of the turbo 20 and the humidifier 30.

The air humidity threshold may correspond to a relative air humidity of 98 % or more, such as substantially 100 % relative air humidity.

The efficiency decrease of the fuel cell system 1 and of the fuel cell stack 10, and/or the relative air humidity at the inlet of the fuel cell stack 10, may be measured during stationary operating conditions of the fuel cell system 1. For example, the measurement/s may be performed during a minimum time period during the stationary operating conditions of the fuel cell system 1, such as a time period of 1-20 minutes.

The stationary operating conditions may be associated with one or more predetermined road segments for the vehicle 100. The one or more predetermined road segments may be road segments where stationary operating conditions can be expected. For example, a predetermined road segment may correspond to a road stretch without, or with only minor, varying inclinations, such as a portion of a highway where there are no or only minor inclinations.

By way of example, when it is determined that there is a combined degradation state of the turbo 20 and the humidifier 30, e.g. when the relative air humidity value is below the air humidity threshold, the method may further comprise using a humidifier model for estimating a level of degradation of the humidifier 30. A humidifier model to estimate the level of degradation may for example be a model which models the humidifier 30 in accordance with the first law of thermodynamics for open systems. For example, a model may be provided which models the ability of the humidifier 30, e.g. the ability of a membrane (not shown) of the humidifier 30, to transport water mass and heat from a humid side to a dry side thereof. As such, by way of example, the humidifier 30 may be modelled as two parts, a first part being a volume with dry air and a second part being a volume with wet air, wherein water mass and heat is transported through the membrane from the second part to the first part. By fitting measured parameters in the model, values of water mass and heat transported may be obtained, and these values may be used for estimating the degradation state of the humidifier. For example, these values may be compared with a reference to thereby obtain a value indicative of the state of health of the humidifier. The reference may for example correspond to a situation when the humidifier 30 is new and not yet used in operation. The measured parameters may for example be measured downstream and/or upstream the humidifier 30 during use, and may be at least one of an airflow, waterflow, relative humidity, pressure, air temperature and water temperature. In addition, the model may include a parameter relating to a thickness of the membrane, which for example may affect the ability of the membrane to transport water mass and/or heat as a function of time. By way of example, the model used for the humidifier 30 for obtaining the values for heat and water mass transferred per time unit may be based on the humidifier model as described in the following Article: "Modeling and Control of Cathode Air Humidity for PEM Fuel Cell Systems", Zhiyang Liu et al, IFAC (International Federation of Automatic Control) PapersOnLine 50-1 (2017) 4751-4756, 2017. It shall however be noted that this is just an example of how to model a humidifier, and the method is not limited to only this example. In general, any model which can provide values for heat and water mass transported from the humid side to the dry side of the humidifier 30 may be used for estimating the degradation state of the humidifier 30.

The efficiency decrease of the fuel cell stack 10 may be measured by use of polarization curves and/or by electrochemical impedance spectra of the fuel cell stack 10.

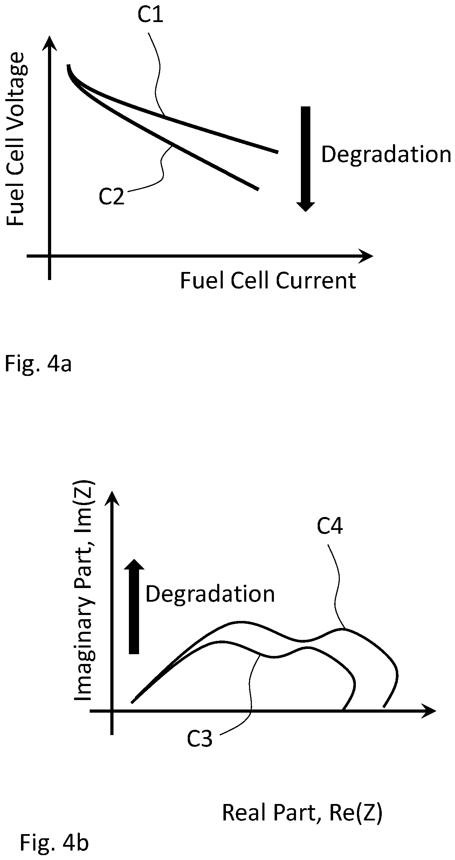

Fig. 4a shows a graph with polarization curves C1, C2 for the fuel cell stack 10. In this example, the y-axis represents fuel cell voltage level (volt) and the x-axis represents fuel cell current level (ampere). Accordingly, the graph represents fuel cell voltage as a function of fuel cell current. The example graph includes two polarization curves, C1 and C2. The polarization curve C1 relates to the fuel cell stack 10 at a time T0. The polarization curve C1 is in this example representing the second reference efficiency as mentioned in the above. For example, the polarization curve C1 may relate to the fuel cell stack 10 when it is new, i.e. a new non-used fuel cell stack 10. The polarization curve C2, on the other hand, may relate to the fuel cell stack 10 when it has been used for a number of operating hours, e.g. T0 + n hours, where n is a positive integer. A difference between the polarization curves C1 and C2 represents a level of degradation of the fuel cell stack 10, indicated by the downwardly directed arrow in the graph. Accordingly, the level of degradation of the fuel cell stack 10 may be obtained by use of this graph. For example, the level of degradation of the fuel cell stack 10 may be expressed in percentage.

Fig. 4b shows a graph representing electrochemical impedance spectra of the fuel cell stack 10. Electrochemical impedance spectroscopy is e.g. known for characterizing a condition of an electrochemical system, such as a fuel cell. Electrochemical impedance spectroscopy may for example be performed by providing a sinusoidal pulse to the system, such as a voltage pulse, and measuring a current pulse from the system, or vice versa. In this example, the y-axis represents imaginary impedance and the x-axis represents real impedance of the fuel cell stack 10. The impedance is in this example expressed in Ohm. Accordingly, the graph represents imaginary impedance as a function of real impedance of the fuel cell stack 10. In the graph, two curves C3, C4 are plotted. The curve C3 relates to the fuel cell stack 10 at the time T0 as mentioned in the above. In this example, the curve C3 is representing the second reference efficiency as mentioned in the above. The curve C4 relates to the fuel cell stack 10 when it has been used for T0 + n hours, where n is a positive integer. Hence, a difference between the curves C3 and C4 represents a level of degradation of the fuel cell stack 10, indicated by the upwardly directed arrow in the graph. Accordingly, the level of degradation of the fuel cell stack 10 may be obtained by use of this graph. For example, the level of degradation of the fuel cell stack 10 may also in this example be expressed in percentage.

For example, the polarization curves and/or the electrochemical impedance spectroscopy may be measured in a DC/DC converter (not shown) which electrically connects the fuel cell system 1 to at least one electric motor (not shown) of the vehicle 100. The at least one electric motor is typically used for propulsion of the vehicle 100.

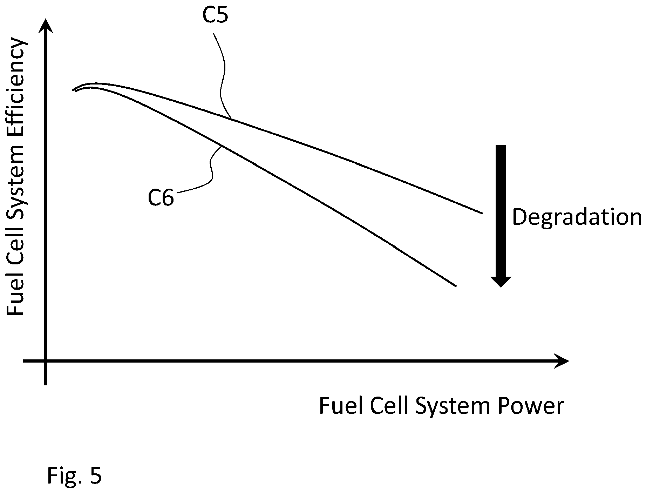

The fuel cell system efficiency value which corresponds to the measured efficiency decrease of the fuel cell system 1 during use with respect to the first reference efficiency may for example be represented as indicated in fig. 5. Accordingly, as shown, fuel cell system efficiency may be plotted as a function of fuel cell system power. The curve C5 represents the fuel cell system 1 at the time T0 as mentioned in the above and the curve C6 represents the fuel cell system 1 at the time T0 + n hours as also mentioned in the above. Accordingly, the level of degradation of the fuel cell system 1 may be obtained by use of this graph. For example, the level of degradation of the fuel cell system 1 may also in this example be expressed in percentage.

The method may further comprise:
- measuring the efficiency decrease of the fuel cell system 1 during use for obtaining the fuel cell system efficiency value, measuring the efficiency decrease of the fuel cell stack 10 during use for obtaining the fuel cell stack efficiency value, and/or measuring the relative air humidity at the inlet of the fuel cell stack 10 for obtaining the relative air humidity value. The measurements may be performed by sensors as mentioned in the above.

Additionally, or alternatively, the method may further comprise:
- updating operating constraints of the fuel cell system 1 when the set degradation state of the turbo 20 and/or the set combined degradation state of the turbo 20 and the humidifier 30 fulfil a criterion.

The above mentioned method may be implemented in the control unit 40 as a computer program which comprises program code means for performing the steps of the method.

It is to be understood that the present invention is not limited to the embodiments described above and illustrated in the drawings; rather, the skilled person will recognize that many changes and modifications may be made within the scope of the appended claims.

## Claims

1. A computer-implemented method for determining a degradation state of a turbo (20) and/or a humidifier (30) of a fuel cell system (1) for a vehicle (100), the fuel cell system (1) comprising a fuel cell stack (10), in addition to the turbo (20) and the humidifier (30), wherein the method comprises:
- obtaining (S1) a fuel cell system efficiency value which corresponds to a measured efficiency decrease of the fuel cell system (1) during use with respect to a first reference efficiency,
- obtaining (S2) a fuel cell stack efficiency value which corresponds to a measured efficiency decrease of the fuel cell stack (10) during use with respect to a second reference efficiency, and
- determining (S3) the degradation state of the turbo (20) and/or the humidifier (30) based on a difference between the fuel cell system efficiency value and the fuel cell stack efficiency value.

2. The method according to claim 1, further comprising:
- obtaining (S4) a relative air humidity value which corresponds to a measured relative air humidity during use at an inlet of the fuel cell stack (10), and, when the relative air humidity value is equal to or above an air humidity threshold, setting (S5) the difference as corresponding to a degradation state of the turbo (20), and/or, when the relative air humidity value is below the air humidity threshold, setting (S6) the difference as corresponding to a combined degradation state of the turbo (20) and the humidifier (30).

3. The method according to claim 2, wherein the air humidity threshold corresponds to a relative air humidity of 98 % or more, such as substantially 100 % relative air humidity.

4. The method according to any one of the preceding claims, wherein the efficiency decrease of the fuel cell system (1) and of the fuel cell stack (10), and/or the relative air humidity at the inlet of the fuel cell stack (10) according to claim 2, is/are measured during stationary operating conditions of the fuel cell system (1).

5. The method according to claim 4, wherein the measurement/s is/are performed during a minimum time period during the stationary operating conditions of the fuel cell system (1).

6. The method according to any one of claims 4-5, wherein the stationary operating conditions are associated with one or more predetermined road segments for the vehicle (100).

7. The method according any one of the preceding claims, wherein the efficiency decrease of the fuel cell stack (10) is measured by use of polarization curves and/or by electrochemical impedance spectra of the fuel cell stack (10).

8. The method according to any one of the preceding claims, further comprising:
- measuring the efficiency decrease of the fuel cell system (1) during use for obtaining the fuel cell system efficiency value, measuring the efficiency decrease of the fuel cell stack (10) during use for obtaining the fuel cell stack efficiency value, and/or measuring the relative air humidity at the inlet of the fuel cell stack (10) for obtaining the relative air humidity value.

9. The method according to claim 2, further comprising:
- updating operating constraints of the fuel cell system (1) when the set degradation state of the turbo (20) and/or the set combined degradation state of the turbo (20) and the humidifier (30) fulfil a criterion.

10. A control unit (40) for determining a degradation state of a turbo (20) and/or a humidifier (30) of a fuel cell system (1) for a vehicle (100), the fuel cell system (1) comprising a fuel cell stack (10), in addition to the turbo (20) and the humidifier (30), wherein the control unit (40) is configured to perform the steps of the method according to any one of the preceding claims.

11. A fuel cell system (1) for a vehicle (100), the fuel cell system (1) comprising a fuel cell stack (10), a turbo (20) and a humidifier (30), and further comprising at least one first sensor () for measuring efficiency decrease of the fuel cell system (1) during use, at least one second sensor () for measuring efficiency decrease of the fuel cell stack (10) during use and at least one third sensor () for measuring relative air humidity at an inlet of the fuel cell stack (10) during use, wherein the fuel cell system (1) further comprises a control unit (40) according to claim 10.

12. A vehicle (100) comprising a fuel cell system (1) according to claim 11.

13. A computer program comprising program code means for performing the steps of any of claims 1-9 when said program is run on the control unit (40) according to claim 10.

14. A computer readable medium carrying a computer program comprising program code means for performing the steps of any of claims 1-9 when said program product is run on the control unit (40) according to claim 10.

## Patentansprüche

1. Computerimplementiertes Verfahren zum Bestimmen eines Degradationszustands eines Turboladers (20) und/oder eines Befeuchters (30) eines Brennstoffzellensystems (1) für ein Fahrzeug (100), das Brennstoffzellensystem (1) umfassend, zusätzlich zu dem Turbolader (20) und dem Befeuchter (30), einen Brennstoffzellenstapel (10), wobei das Verfahren umfasst:
- Erhalten (S1) eines Brennstoffzellensystem-Wirkungsgradwertes, der einer gemessenen Effizienzabnahme des Brennstoffzellensystems (1) während einer Verwendung in Bezug auf einen ersten Referenzwirkungsgrad entspricht,
- Erhalten (S2) eines Brennstoffzellenstapel-Wirkungsgradwertes, der einer gemessenen Effizienzabnahme des Brennstoffzellenstapels (10) während der Verwendung in Bezug auf einen zweiten Referenzwirkungsgrad entspricht, und
- Bestimmen (S3) des Degradationszustands des Turboladers (20) und/oder des Befeuchters (30) basierend auf einer Differenz zwischen dem Brennstoffzellensystem-Wirkungsgradwert und dem Brennstoffzellenstapel-Wirkungsgradwert.

2. Verfahren nach Anspruch 1, ferner umfassend:
- Erhalten (S4) eines relativen Luftfeuchtigkeitswerts, der einer gemessenen relativen Luftfeuchtigkeit während der Verwendung an einem Einlass des Brennstoffzellenstapels (10) entspricht, und, wenn der relative Luftfeuchtigkeitswert gleich oder größer als ein Luftfeuchtigkeitsschwellenwert ist, Festlegen (S5) der Differenz als einem Degradationszustand des Turboladers (20) entsprechend, und/oder, wenn der relative Luftfeuchtigkeitswert unter dem Luftfeuchtigkeitsschwellenwert liegt, Festlegen (S6) der Differenz als einem kombinierten Degradationszustand des Turboladers (20) und des Befeuchters (30) entsprechend.

3. Verfahren nach Anspruch 2, wobei der Luftfeuchtigkeitsschwellenwert einer relativen Luftfeuchtigkeit von 98 % oder mehr, wie im Wesentlichen 100 % relativer Luftfeuchtigkeit, entspricht.

4. Verfahren nach einem der vorstehenden Ansprüche, wobei die Wirkungsgradabnahme des Brennstoffzellensystems (1) und des Brennstoffzellenstapels (10) und/oder die relative Luftfeuchtigkeit an dem Einlass des Brennstoffzellenstapels (10) nach Anspruch 2 bei stationären Betriebsbedingungen des Brennstoffzellensystems (1) gemessen wird/werden.

5. Verfahren nach Anspruch 4, wobei die Messung/en während einer Mindestzeitdauer während der stationären Betriebsbedingungen des Brennstoffzellensystems (1) durchgeführt wird/werden.

6. Verfahren nach einem der Ansprüche 4 bis 5, wobei die stationären Betriebsbedingungen einem oder mehreren zuvor bestimmten Straßenabschnitten für das Fahrzeug (100) zugeordnet sind.

7. Verfahren nach einem der vorstehenden Ansprüche, wobei die Wirkungsgradabnahme des Brennstoffzellenstapels (10) durch Verwendung von Polarisationskurven und/oder durch elektrochemische Impedanzspektren des Brennstoffzellenstapels (10) gemessen wird.

8. Verfahren nach einem der vorstehenden Ansprüche, ferner umfassend: - Messen der Wirkungsgradabnahme des Brennstoffzellensystems (1) während der Verwendung zum Erhalten des Brennstoffzellensystem-Wirkungsgradwerts, Messen der Wirkungsgradabnahme des Brennstoffzellenstapels (10) während der Verwendung zum Erhalten des Brennstoffzellenstapel-Wirkungsgradwerts, und/oder Messen der relativen Luftfeuchtigkeit an dem Einlass des Brennstoffzellenstapels (10) zum Erhalten des relativen Luftfeuchtigkeitswerts.

9. Verfahren nach Anspruch 2, ferner umfassend:
- Aktualisieren von Betriebsbeschränkungen des Brennstoffzellensystems (1), wenn der festgelegte Degradationszustand des Turboladers (20) und/oder der festgelegte kombinierte Degradationszustand des Turboladers (20) und des Befeuchters (30) ein Kriterium erfüllen.

10. Steuereinheit (40) zum Bestimmen eines Degradationszustands eines Turboladers (20) und/oder eines Befeuchters (30) eines Brennstoffzellensystems (1) für ein Fahrzeug (100), das Brennstoffzellensystem (1) umfassend, zusätzlich zu dem Turbolader (20) und dem Befeuchter (30), einen Brennstoffzellenstapel (10), wobei die Steuereinheit (40) konfiguriert ist, um die Schritte des Verfahrens nach einem der vorstehenden Ansprüche durchzuführen.

11. Brennstoffzellensystem (1) für ein Fahrzeug (100), das Brennstoffzellensystem (1) umfassend einen Brennstoffzellenstapel (10), einen Turbolader (20) und einen Luftbefeuchter (30) und ferner umfassend mindestens einen ersten Sensor () zum Messen einer Wirkungsgradabnahme des Brennstoffzellensystems (1) während der Verwendung, mindestens einen zweiten Sensor () zum Messen einer Effizienzabnahme des Brennstoffzellenstapels (10) während der Verwendung und mindestens einen dritten Sensor () zum Messen der relativen Luftfeuchtigkeit an einem Einlass des Brennstoffzellenstapels (10) während der Verwendung, wobei das Brennstoffzellensystem (1) ferner eine Steuereinheit (40) nach Anspruch 10 umfasst.

12. Fahrzeug (100), umfassend ein Brennstoffzellensystem (1) nach Anspruch 11.

13. Computerprogramm, umfassend Programmcodemittel zum Durchführen der Schritte nach einem der Ansprüche 1 bis 9, wenn das Programm auf der Steuereinheit (40) nach Anspruch 10 ausgeführt wird.

14. Computerlesbares Medium, das ein Computerprogramm trägt, umfassend ein Programmcodemittel zum Durchführen der Schritte nach einem der Ansprüche 1 bis 9, wenn das Programmprodukt auf der Steuereinheit (40) nach Anspruch 10 ausgeführt wird.

## Revendications

1. Procédé implémenté par ordinateur permettant de déterminer un état de dégradation d'un turbo (20) et/ou d'un humidificateur (30) d'un système de pile à combustible (1) destiné à un véhicule (100), le système de pile à combustible (1) comprenant un empilement de piles à combustible (10), en plus du turbo (20) et de l'humidificateur (30), dans lequel le procédé comprend :
- l'obtention (S1) d'une valeur de rendement de système de pile à combustible qui correspond à une diminution mesurée de rendement du système de pile à combustible (1) pendant l'utilisation par rapport à un premier rendement de référence,
- l'obtention (S2) d'une valeur de rendement d'empilement de piles à combustible qui correspond à une diminution mesurée de rendement de l'empilement de piles à combustible (10) pendant l'utilisation par rapport à un second rendement de référence, et
- la détermination (S3) de l'état de dégradation du turbo (20) et/ou de l'humidificateur (30) en fonction d'une différence entre la valeur de rendement de système de pile à combustible et la valeur de rendement d'empilement de piles à combustible.

2. Procédé selon la revendication 1, comprenant en outre :
- l'obtention (S4) d'une valeur d'humidité relative de l'air qui correspond à une humidité relative mesurée de l'air pendant l'utilisation au niveau d'une entrée de l'empilement de piles à combustible (10), et, lorsque la valeur d'humidité relative de l'air est égale ou supérieure à un seuil d'humidité de l'air, le réglage (S5) de la différence comme correspondant à un état de dégradation du turbo (20), et/ou, lorsque la valeur d'humidité relative de l'air est inférieure au seuil d'humidité de l'air, le réglage (S6) de la différence comme correspondant à un état de dégradation combiné du turbo (20) et de l'humidificateur (30).

3. Procédé selon la revendication 2, dans lequel le seuil d'humidité de l'air correspond à une humidité relative de l'air de 98 % ou plus, telle que sensiblement 100 % d'humidité relative de l'air.

4. Procédé selon l'une quelconque des revendications précédentes, dans lequel la diminution de rendement du système de pile à combustible (1) et de l'empilement de piles à combustible (10), et/ou l'humidité relative de l'air au niveau de l'entrée de l'empilement de piles à combustible (10) selon la revendication 2, est/sont mesuré(s) pendant des conditions de fonctionnement stationnaires du système de pile à combustible (1).

5. Procédé selon la revendication 4, dans lequel la ou les mesure(s) est/sont mise(s) en oeuvre pendant un laps de temps minimal pendant les conditions de fonctionnement stationnaires du système de pile à combustible (1).

6. Procédé selon l'une quelconque des revendications 4 à 5, dans lequel les conditions de fonctionnement stationnaires sont associées à un ou plusieurs segments routiers prédéterminés pour le véhicule (100).

7. Procédé selon l'une quelconque des revendications précédentes, dans lequel la diminution de rendement de l'empilement de piles à combustible (10) est mesurée par l'utilisation de courbes de polarisation et/ou par des spectres d'impédance électrochimique de l'empilement de piles à combustible (10).

8. Procédé selon l'une quelconque des revendications précédentes, comprenant en outre : - la mesure de la diminution de rendement du système de pile à combustible (1) pendant l'utilisation pour obtenir la valeur de rendement de système de pile à combustible, la mesure de la diminution de rendement de l'empilement de piles à combustible (10) pendant l'utilisation pour obtenir la valeur de rendement d'empilement de piles à combustible, et/ou la mesure de l'humidité relative de l'air au niveau de l'entrée de l'empilement de piles à combustible (10) pour obtenir la valeur d'humidité relative de l'air.

9. Procédé selon la revendication 2, comprenant en outre :
- la mise à jour de contraintes de fonctionnement du système de pile à combustible (1) lorsque l'état de dégradation réglé du turbo (20) et/ou l'état de dégradation combiné réglé du turbo (20) et de l'humidificateur (30) respectent un critère.

10. Unité de commande (40) permettant de déterminer un état de dégradation d'un turbo (20) et/ou d'un humidificateur (30) d'un système de pile à combustible (1) destiné à un véhicule (100), le système de pile à combustible (1) comprenant un empilement de piles à combustible (10), en plus du turbo (20) et de l'humidificateur (30), dans laquelle l'unité de commande (40) est configurée pour mettre en oeuvre les étapes du procédé selon l'une quelconque des revendications précédentes.

11. Système de pile à combustible (1) destiné à un véhicule (100), le système de pile à combustible (1) comprenant un empilement de piles à combustible (10), un turbo (20) et un humidificateur (30), et comprenant en outre au moins un premier capteur () destiné à mesurer la diminution de rendement du système de pile à combustible (1) pendant l'utilisation, au moins un deuxième capteur () destiné à mesurer la diminution de rendement de l'empilement de piles à combustible (10) pendant l'utilisation et au moins un troisième capteur () destiné à mesurer l'humidité relative de l'air au niveau d'une entrée de l'empilement de piles à combustible (10) pendant l'utilisation, dans lequel le système de pile à combustible (1) comprend en outre une unité de commande (40) selon la revendication 10.

12. Véhicule (100) comprenant un système de pile à combustible (1) selon la revendication 11.

13. Programme d'ordinateur comprenant un moyen de code de programme destiné à mettre en oeuvre les étapes de l'une quelconque des revendications 1 à 9 lorsque ledit programme est exécuté sur l'unité de commande (40) selon la revendication 10.

14. Support lisible par ordinateur portant un programme informatique comprenant un moyen de code de programme destiné à mettre en oeuvre les étapes de l'une quelconque des revendications 1 à 9 lorsque ledit produit programme est exécuté sur l'unité de commande (40) selon la revendication 10.
